Europäisches Patentamt

European Patent Office

Office européen des brevets

(19)

(11) Veröffentlichungsnummer: **0 094 600**
**B1**

(12) **EUROPÄISCHE PATENTSCHRIFT**

(45) Veröffentlichungstag der Patentschrift:
**19.02.86**

(21) Anmeldenummer: **83104606.5**

(22) Anmeldetag: **11.05.83**

(51) Int. Cl.⁴: **B 65 D 25/16,** B 65 D 88/62,
B 67 D 1/04

(54) **Verfahren zum Konfektionieren einer flexiblen Innenhülle für die Auskleidung von Transport- oder Lagerbehältern.**

(30) Priorität: **14.05.82 DE 3218332**

(43) Veröffentlichungstag der Anmeldung:
**23.11.83 Patentblatt 83/47**

(45) Bekanntmachung des Hinweises auf die Patenterteilung:
**19.02.86 Patentblatt 86/8**

(84) Benannte Vertragsstaaten:
**BE CH DE FR GB IT LI NL**

(56) Entgegenhaltungen:
**DE - A - 2 900 998**
**DE - A - 2 902 291**
**FR - A - 1 548 386**
**US - A - 2 991 815**

(73) Patentinhaber: **NITTEL GMBH & CO. KG, Keisterbacher Strasse 18, D-6096 Raunheim/Main (DE)**

(72) Erfinder: **Nittel, Walter F., Dr., Keisterbacher Strasse 18, D-6096 Raunheim/Main (DE)**

(74) Vertreter: **Schaefer, Gerhard, Dr., Seitnerstrasse 13, D-8023 Pullach (DE)**

ACTORUM AG

**Beschreibung**

Die Erfindung betrifft ein Verfahren zum Konfektionieren einer flexiblen Innenhülle mit einem Einfüllstutzen, an dem eine Armatur befestigbar ist, für die Auskleidung von Transport- oder Lagerbehältern, wobei die Innenhülle vor ihrer Einführung in den Behälter mit einer schlauchförmigen, abziehbaren Schutzhülle versehen wird.

Derartige Innenbehälter und deren Konfektionierung sind bekannt (DBP 2 900 998). Sie dienen der auswechselbaren, flüssigkeitsdichten Auskleidung von drucklosen oder unter Druck stehenden Behältern. Die bekannten Innenhüllen werden in der Weise gefaltet, dass sie am Einfüllstutzen und an der diesem gegenüberliegenden Stelle auseinandergezogen werden, so dass ein schlauchartiger langgestreckter Körper entsteht. Dessen Endteil wird dann um 180° umgefaltet und die Innenhülle wird mit dem umgefalteten Ende zuerst in die Schutzhülle eingeführt. Eine derartig gefaltete Innenhülle hat den Nachteil, dass die Schutzhülle vor oder zu Beginn des Füllvorganges nicht abgezogen werden kann, da sonst ein unkontrolliertes Entfalten der Innenhülle auftritt und diese durch ungleichmässige Spannung und Belastung reissen kann.

Weiterhin ist eine flexible Innenhülle bekannt (FR-A-1 548 368), die eine bikonische Form hat und bei der die eine Hälfte in die andere Hälfte hineingefaltet ist. Hierdurch ist ein raumsparendes Stapeln dieser Hüllen möglich. Jedoch ist auch hier ein kontrolliertes Entfalten beim Einfüllen von Flüssigkeit nicht gegeben.

Der Erfindung liegt die Aufgabe zugrunde, diesen Nachteil zu vermeiden und mittels einer besonderen Falttechnik zu erreichen, dass ein gleichmässiger Füllvorgang gewährleistet wird.

Erfindungsgemäss wird dies dadurch erreicht, dass die Innenhülle vor der Einführung in die Schutzhülle in der Weise gefaltet wird, dass ihr dem Einfüllstutzen gegenüberliegender Teil auf diesem festgehalten und die Innenhülle dann von aussen um eine in Richtung des Einfüllstutzens verlaufende Achse in der Art eines geschlossenen Schirms an diese herangefaltet wird.

Diese schirmartige Faltung bewirkt, dass nach dem Abziehen der Schutzhülle die Innenhülle weitgehend gleichmässig radial nach aussen fällt und ein gleichmässiger und ungestörter Füllvorgang ermöglicht wird, der die Innenhülle an allen Stellen gleichmässig belastet.

Vorzugsweise besteht die Innenhülle aus zwei am Rande miteinander verschweissten Kunststoff-Folien von kreisrundem Querschnitt, von denen die eine mit einem zentralen Einfüllstutzen versehen ist. Die beiden kreisrunden Folien können an ihren Kanten auch über einen zylindrischen Teil miteinander verschweisst sein.

Die erfindungsgemäss konfektionierten Innenhüllen können der Auskleidung beliebig geformter Behälter dienen, in die Flüssigkeiten eingefüllt werden und die darin drucklos oder unter Druck aufbewahrt werden. Der Druck kann hierbei durch inerte Gase wie Kohlendioxid oder Stickstoff erzeugt werden. Bevorzugt sind kugelförmige oder zylindrische Behälter. Jede andere Form ist möglich. Die Innenhülle besteht aus flexiblem, gegen das einzufüllende Medium resistentem Kunststoff und kann ein- oder mehrschichtig aufgebaut sein. Für viele Zwecke ist Polyäthylen besonders geeignet. Der Einfüllstutzen besteht ebenfalls aus Kunststoff und ist in die Hülle eingeschweisst.

Weitere Einzelheiten und Vorteile der Erfindung können den in der Zeichnung dargestellten Ausführungsbeispielen entnommen werden. Es zeigen:

Fig. 1 bis 3 verschiedene Ausführungsformen einer Innenhülle;

Fig. 4 die erfindungsgemäss zusammengefaltete Innenhülle;

Fig. 5 Anordnung der nach Fig. 4 zusammengefalteten Innenhülle in einer Schutzhülle;

Fig. 6 Anordnung der mit der Schutzhülle versehenen Innenhülle im Tank;

Fig. 7 Abziehen der Schutzhülle;

Fig. 8 Entfalten der Innenhülle.

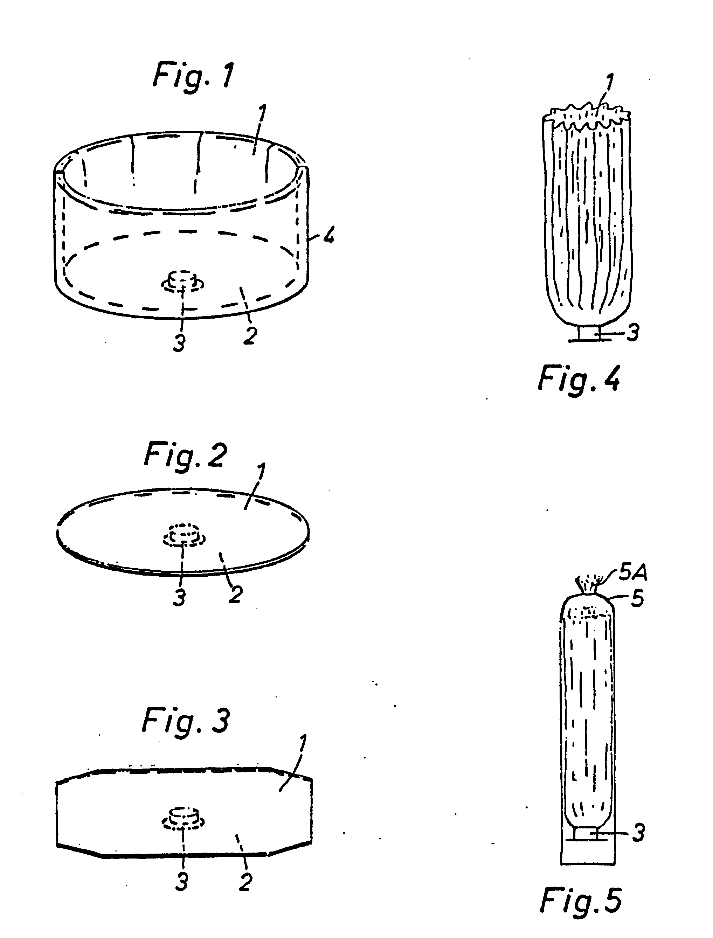

Die in Fig. 1 dargestellte Innenhülle besteht aus zwei scheibenförmigen Kunststoff-Folien 1, 2, die vorzugsweise aus Polyäthylen bestehen und die an ihrer Kante mit einem zylindrischen Mittelteil 4 verschweisst sind. In die untere Folie 2 ist ein verstärkter zylindrischer Einfüllstutzen 3 eingeschweisst.

Fig. 2 zeigt eine ähnliche Innenhülle, bei der die beiden scheibenförmigen Folien 1 und 2 ohne Mittelteil 4 am Rande direkt miteinander verschweisst sind. Eine solche Innenhülle eignet sich besonders zur Auskleidung kugelförmiger Behälter.

Fig. 3 zeigt eine weitere Innenhülle, bei der zwei achteckige Folien am Rande miteinander verschweisst sind.

Die erfindungsgemässe Falttechnik soll im folgenden der Einfachheit halber anhand der in Fig. 2 dargestellten Innenhülle beschrieben werden. Die Faltung erfolgt hierbei in der Weise, dass die beiden scheibenförmigen Folienteile 1 und 2 zunächst aufeinandergelegt werden. Danach werden beide Folien, ausgehend vom Einfüllstutzen 3, vom Rande her gleichmässig nach oben gefaltet, wobei der mittlere Teil der oberen Folie 1 auf dem Einfüllstutzen 3 liegen bleibt. Das Ergebnis dieser Falttechnik ist in Fig. 4 dargestellt. Danach wird über die so gefaltete Innenhülle eine am einen Ende geschlossene Schutzhülle 5 gezogen. Diese kann beispielsweise aus einem Kunststoffschlauch aus gleichem Material bestehen, welcher am oberen Ende 5A zugeschweisst, zugebunden, geknotet oder offen sein kann.

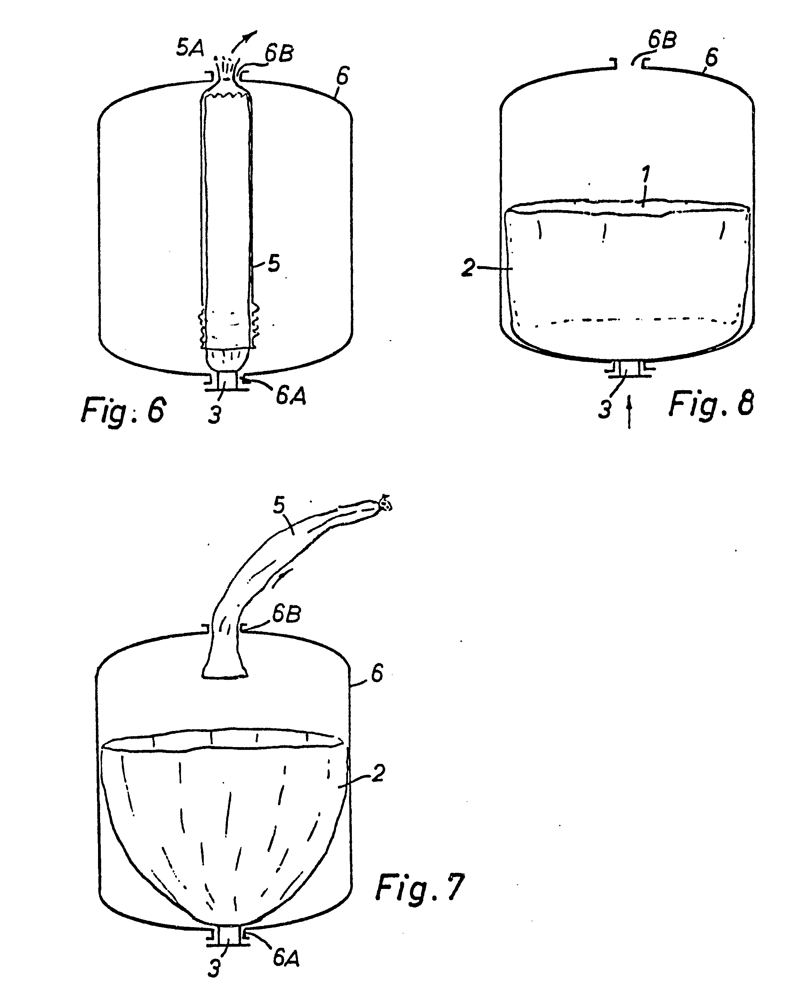

Die mit dieser Schutzhülle 5 versehene Innenhülle kann nunmehr, wie in den Fig. 6 bis 8 dargestellt, in einen Behälter 6 eingebracht und befüllt werden. Der dargestellte Behälter 6 ist am unteren Ende mit einer Ausflussöffnung 6A, am oberen Ende mit einer Öffnung 6B versehen. Vor dem Befüllen wird die mit der Schutzhülle 5 versehene Innenhülle 1, 2 durch die untere Öffnung 6A des Behälters 6 in den Behälter 6 eingeführt. Dies kann in der Weise geschehen, dass mittels einer Schnur, eines Bandes oder eines Drahtes, der durch die obere Öffnung 6B in den Behälter 6 und die untere Öffnung 6A hindurchgeführt worden ist, am oberen Ende 5A der Innenhülle befestigt wird und dieses Ende danach durch den Behälter 6 hindurchgezogen wird, bis es sich in oder nahe der oberen Öffnung 6B des Behälters 6 befindet. Der Einfüllstutzen 3 wird danach mit einer Armatur in der unteren Behälteröffnung 6A befestigt. Die Schutzhülle 5 kann dann, wie in Fig. 7 dargestellt, unmittelbar entfernt werden, wodurch sich die Innenhülle in der in Fig. 7 dargestellten Weise entfaltet. Wird dann der Befüllvorgang eingeleitet, so legt sich die Innenhülle 1, 2 an die Wand des Behälters 6 an und entfaltet sich sukzessive mit dem Fortschreiten des Füllvorganges.

### Patentansprüche

1. Verfahren zum Konfektionieren einer flexiblen Innenhülle mit einem Einfüllstutzen, an dem eine Armatur befestigbar ist, für die Auskleidung von Transport- oder Lagerbehältern, wobei die Innenhülle mit einer schlauchartigen, abziehbaren Schutzhülle versehen wird, dadurch gekennzeichnet, dass die Innenhülle (1, 2) vor der Einführung in die Schutzhülle (5) in der Weise gefaltet wird, dass ihr dem Einfüllstutzen (3) gegenüberliegender Teil auf diesem festgehalten und die Innenhülle (1, 2) dann von aussen um eine in Richtung des Einfüllstutzens (3) verlaufende Achse in der Art eines geschlossenen Schirms an diese herangefaltet wird.

2. Nach dem Verfahren gemäss Anspruch 1 konfektionierte Innenhülle, dadurch gekennzeichnet, dass diese aus zwei am Rande miteinander verschweissten Kunststoff-Folien (1, 2) mit kreisrundem Querschnitt besteht, von denen eine (2) mit dem Einfüllstutzen (3) versehen ist.

3. Nach dem Verfahren gemäss Anspruch 1 konfektionierte Innenhülle, dadurch gekennzeichnet, dass diese aus zwei kreisrunden Kunststoff-Folien (1, 2) aufgebaut ist, deren Kanten über eine zylindrische Folie (4) miteinander verschweisst sind.

### Claims

1. A method of preparing a flexible internal liner having a filling connection to which a fitting can be secured, for lining transportation or storage containers, wherein the liner is provided with a tubular protective casing which can be drawn off, characterised in that, before being inserted into the casing (5), the liner (1, 2) is folded in such a way that the portion thereof which is in opposite relationship to the filling connection (3) is retained thereon and the liner (1, 2) is then folded from the outside around an axis extending in the direction of the filling connection (3), in the manner of a closed umbrella, towards said axis.

2. An internal liner which is prepared by the method according to claim 1, characterised in that it comprises two plastics foils (1, 2) of round cross-section, which are welded together at the edge and of which one (2) is provided with the filling connection (3).

3. An internal liner prepared by the method according to claim 1, characterised in that it is made up from two round plastics foils (1, 2), the edges of which are welded together by way of a cylindrical foil (4).

### Revendications

1. Procédé de fabrication d'une gaine intérieure flexible pourvue d'un raccrod de remplissage sur lequel une garniture est susceptible d'être fixée, pour revêtir intérieurement des récipients de transport ou de stockage, la gaine intérieure étant pourvue d'une enveloppe protectrice tubulaire amovible, caractérisé en ce qu'il consiste à plier la gaine intérieure (1, 2) avant son introduction dans l'enveloppe protectrice (5) de façon telle que sa partie faisant face au raccord de remplissage (3) soit retenue sur celui-ci, et à replier ensuite la gaine intérieure (1, 2), à partir de l'extérieur, vers un axe orienté dans la direction du raccord de remplissage (3), à la manière d'un parapluie fermé.

2. Gaine intérieure fabriquée par le procédé selon la revendication 1, caractérisé en ce qu'elle est constituée par deux feuilles (1, 2) de matière synthétique réunies par soudage de leurs bords et définissant une section transversale circulaire, l'une (2) desdites feuilles étant munie du raccord de remplissage (3).

3. Gaine intérieure fabriquée par le procédé selon la revendication 1, caractérisé en ce qu'elle est constituée par deux feuilles circulaires (1, 2) de matière synthétique dont les bords sont soudés l'un à l'autre via une feuille cylindrique (4).

*Fig. 1*

*Fig. 4*

*Fig. 2*

*Fig. 3*

*Fig. 5*

5A 6B 6

5

Fig. 6   3   6A

6B 6

1

2

3   Fig. 8

5

6B

6

2

3   6A   Fig. 7